# EUROPÄISCHE PATENTSCHRIFT

(11) **EP 0 843 370 B1**
(45) Veröffentlichungstag und Bekanntmachung des Hinweises auf die Patenterteilung: **04.10.2001**
(21) Anmeldenummer: 97119743.9
(22) Anmeldetag: 11.11.1997
(51) Int. Cl.: H01M 2/36

(54) **Wassernachfüllstopfen für einen flüssigen Elektrolyten enthaltende Batterien**
Automatic watering plug for batteries containing liquid electrolyte
Bouchon de remplissage automatique pour batterie d'accumulateurs contenant de l'électrolyte liquide

(30) Priorität: 14.11.1996 DE 19647151
(43) Veröffentlichungstag der Anmeldung: 20.05.1998
(73) Patentinhaber: Landau, Reinhard, 41749 Viersen (DE)
(72) Erfinder: Landau, Reinhard, 41749 Viersen (DE)
(74) Vertreter: Manitz, Gerhart, Dr.

(56) Entgegenhaltungen:
- EP-A- 0 207 346
- EP-A- 0 234 278
- WO-A-91/17577
- DE-A- 3 725 976
- PATENT ABSTRACTS OF JAPAN vol. 013, no. 166 (E-746), 20.April 1989 -& JP 64 000644 A (SHIN KOBE ELECTRIC MACH CO LTD), 5.Januar 1989,

## Beschreibung

Die Erfindung betrifft einen Wassernachfüllstopfen für einen flüssigen Elektrolyten enthaltende Batterien nach dem Oberbegriff des Patentanspruchs 1.

Bei einem vorbekannten Wassernachfüllstopfen dieser Art (DE-295 11 994 U, EP 756 341) ist der Ventilsitz an einem vom Stopfengehäuse getrennten deckelartigen Bauelement vorgesehen, welches stopfenartig in ein oben offenes Ventilgehäuse eingesetzt und durch Klemmung gehalten ist. Nachteilig an dieser bekannten Anordnung ist, daß sich beispielsweise beim Frieren von im Ventilgehäuse befindlichem Wasser und die damit verbundenen Dehnungsvorgänge das Ventilsitzbauelement vom Stopfengehäuse lösen kann, wodurch die Wirksamkeit des Ventils zumindest weitgehend entfällt und es zu einem Überlaufen der in der Batterie vorhandenen Säure kommen kann. Außerdem ist die Herstellung des bekannten Wassernachfüllstopfens aufwendig, und zwar insbesondere wegen des Erfordernisses der Herstellung des Ventilsitzbauelementes in einem besonderen Arbeitsgang. Wegen der Vielzahl von über den Umfang verteilten Schlitzen am Ventilsitzbauelement ist auch dessen Herstellung aufwendig.

Ein gattungsgemäßer Wassernachfüllstopfen ist aus der DE-A-37 25 976 bekannt. Das durch das Ventil hindurchgelassene Wasser fließt von der Wasserkammer an der Ventilstange vorbei in die Batteriezelle, auf die der Stopfen aufgesetzt ist.

Es ist auch schon bekannt (EP 756 341 A1; WO 91/17577), außerhalb der Aufnahmebohrung für die Schwimmerstange Wasserdurchlaufkammern vorzusehen, die oben mit der Wasserkammer und unten mit demjenigen Bereich des Stopfengehäuses in Strömungsverbindung stehen, welche an den Innenraum der Batteriezelle anschließt.

Aus der EP 0 234 278 A1 ist ein Wassernachfüllstopfen für Batterien bekannt, bei dem dem Ventil das für die Nachfüllung vorgesehene Wasser von oben zugeführt und durch einen unterhalb des Ventils vorgesehenen Kanal in die Batteriezelle abgeführt wird. Zur Betätigung des Ventilkörpers mittels der Schwimmerstange ist ein Gestänge mit Gelenken erforderlich.

Die Erfindung befaßt sich mit derjenigen Gattung von Wassernachfüllstopfen, bei denen das Wasser dem Ventil von unten zugeführt wird und oberhalb des Ventils eine Kammer für das vom Ventil durchgelassene Wasser vorgesehen ist.

Die Erfindung ist in Anspruch 1 dargestellt. Aufgrund dieser Ausbildung strömt das Wasser bevorzugt durch die Kanalstücke und die Wasserdurchlaufkammer in die Batteriezellen ein. Dadurch Kann die Aufnahmebohrung für die Schwimmerstange ganz nach dem Gesichtspunkt einer guten Vertikal führung für den Schwimmer ausgelegt sein.

Eine baulich bevorzugte Weiterbildung der Erfindung entnimmt man Anspruch 2.

Die Erfindung wird vorzugsweise auch in Kombination mit der an sich bekannten Anordnung der Wasserdurchlaufkammer nach Anspruch 3 angewendet.

Gemäß Anspruch 4 wird innerhalb des Stopfengehäuses eine auch den Ventilsitz als integrierenden Bestandteil enthaltende Ventilkammer ausgebildet. Lediglich der Ventilkörper mit der vorzugsweise an ihm vorgesehenen Ventilstange ist nach wie vor als separates Bauelement herzustellen, welches jedoch durch einfaches Einführen in die Ventilkammer von außen montierbar ist.

Eine besonders vorteilhafte Umströmung des Ventilkörpers wird durch die Ausbildung nach Anspruch 5 erreicht, wobei die Wasserzufuhr zum Ventil bevorzugt gemäß Anspruch 6 erfolgt.

Erfindungsgemäß befinden sich der Ventilsitz und die Ventilstangendurchlaßbohrung zweckmäßigerweise oberhalb der Ventilkammer, welche bei der Herstellung unten zunächst offen ist, damit von dort der Ventilkörper mit der Ventilstange und bevorzugt auch ein O-Dichtring problemlos einführbar ist. Anschließend erfolgt dann ein Verschluß der den Ventilkörper enthaltenden Ventilkammer durch den Ringflansch des Anschlagzapfens gemäß den Ansprüchen 7 oder 8.

Besonders günstige bauliche Anordnungen entnimmt man den Ansprüchen 9 und 10.

Vorzugsweise ist in das Stopfengehäuse auch noch gemäß Anspruch 11 eine Diagnoseöffnung integriert. Sowohl für die Wasserkammer als auch für die Diagnoseöffnung wird gemäß Anspruch 12 zweckmäßigerweise ein gemeinsamer Deckel verwendet.

Eine weitere besonders vorteilhafte Ausführungsform ist durch Anspruch 13 gekennzeichnet. Auch die der Wasserzufuhr bzw. dem Wasserdurchlaß dienenden Rohrstutzen müssen demnach nicht als gesondertes Bauteil hergestellt und anschließend mit dem Stopfengehäuse zusammengebaut werden. Vielmehr werden mit der Herstellung des Stopfengehäuses auch die Rohrstutzen einstückig in einem Arbeitsgang mithergestellt.

Eine besonders zweckmäßige bauliche Ausbildung entnimmt man Anspruch 14 und 15.

Durch den strukturellen Aufbau nach Anspruch 16 wird eine besonders kompakte Anordnung erzielt, indem der unterhalb und oberhalb der Deckplatte vorgesehene Raum optimal genutzt wird.

Der vertikale Verbindungskanal, die Bohrung und die Ventilkammer mit den Axialnuten bilden einen siphonartigen Verschluß für das Innere der Batteriezelle, auf den der erfindungsgemäße Nachfüllstopfen aufgesetzt ist, wobei in dem betreffenden Bereich stets Wasser vorhanden ist, welches ein Austreten von Gasen aus der Batteriezelle nach außen in die Rohrstutzen und die daran angeschlossenen Wasserzuführschläuche verhindert.

Nach Anspruch 17 soll erfindungsgemäß der Ventilkörper allseits nur von Teilen des Stopfengehäuses 11 umgeben sein, ohne daß sich mit Ausnahme von Teilen des Anschlagzapfens andere Bauelemente zwischen dem Ventilkörper und den umgebenden Teilen des Stopfengehäuses befinden.

Durch die Maßnahmen des Anspruches 18 ist eine Flüssigkeitsströmung durch das Ventil bis zu dessen endgültigem Schließen gewährleistet.

Besonders vorteilhaft ist nach Anspruch 19 das Vorsehen einer besonderen O-Ring-Aufnahmevertiefung, weil hierdurch ein besonders sicherer Halt des O-Ringes gewährleistet ist, da diese Aufnahmevertiefung genau komplementär zur Form des O-Ringes ausgebildet ist.

Die Axialrippen sollen gemäß Anspruch 20 dimensioniert sein, um das Einbringen des O-Ringes in die zugeordnete Vertiefung bei der Montage nicht zu behindern.

Damit die aus dem Batterie-Inneren austretenden Gase entweichen können, ist die Ausführungsform nach Anspruch 21 und 22 zweckmäßig. Der Gasleitkanal wird dabei erfindungsgemäß derart im Querschnitt begrenzt und/oder unten verlängert, daß bei starken Bewegungen auftretende Spritzer nach Möglichkeit nicht bis zur Gasaustrittsöffnung gelangen. Der Deckel ist bevorzugt von einem nach unten vorstehenden Deckelrand umgeben. Die Gasaustrittsöffnung wird zweckmäßig von dem Deckelrand so abgedeckt, daß der Luftaustausch mit der Umgebung nicht behindert wird.

Die Ausführungsform nach Anspruch 23 gewährleistet eine einwandfreie Führung der Ventilstange auch beim Vorsehen des erfindungsgemäßen Kanalstückes bzw. der erfindungsgemäßen Kanalstücke. Zwischen dem oberen Ende der Bohrung und dem unteren Ende der Führungsmanschette kann das aus dem Ventil austretende Wasser in das Kanalstück bzw. die Kanalstücke und die daran anschließenden vertikalen Wasserdurchlaufkammern gelangen.

Durch die Merkmale des Anspruches 24 wird erreicht, daß die Führungsmanschette im wesentlichen innerhalb des Kanalstückes bzw. der Kanalstücke angeordnet ist.

Die Erfindung wird im folgenden beispielsweise anhand der Zeichnung beschrieben; in dieser zeigt:
- Figur 1: eine teilweise vertikal geschnittene Seitenansicht eines erfindungsgemäßen Wassernachfüllstopfens bei geöffnetem Ventil,
- Figur 2: eine analoge Schnittansicht bei weggelassener Schwimmerstange und weggelassenem Schwimmer im geschlossenen Zustand des Ventils,
- Figur 3: eine schematische Schnittansicht nach Linie III-III in Figur 1,
- Figur 4: einen schematischen Schnitt nach Linie IV-IV in Figur 3,
- Figur 5: eine schematische Schnittansicht nach Linie V-V in Figur 3,
- Figur 6: eine Seitenansicht des erfindungsgemäßen Wassernachfüllstopfens in Richtung des Pfeiles VI in Figur 1,
- Figur 7: eine Seitenansicht des gleichen Gegenstandes aus einer um 90° um die Mittelachse 65 verschwenkten Richtung,
- Figur 8: eine Draufsicht des erfindungsgemäßen Wassernachfüllstopfens vor Einbau des Ventilkörpers und des Querstückes, wobei der Deckel und die Schwimmerstange nur gestrichelt angedeutet sind,
- Figur 9: eine teilweise geschnittene Ansicht des erfindungsgemäßen Wassernachfüllstopfens von unten nach Linie IX-IX in Figur 1.

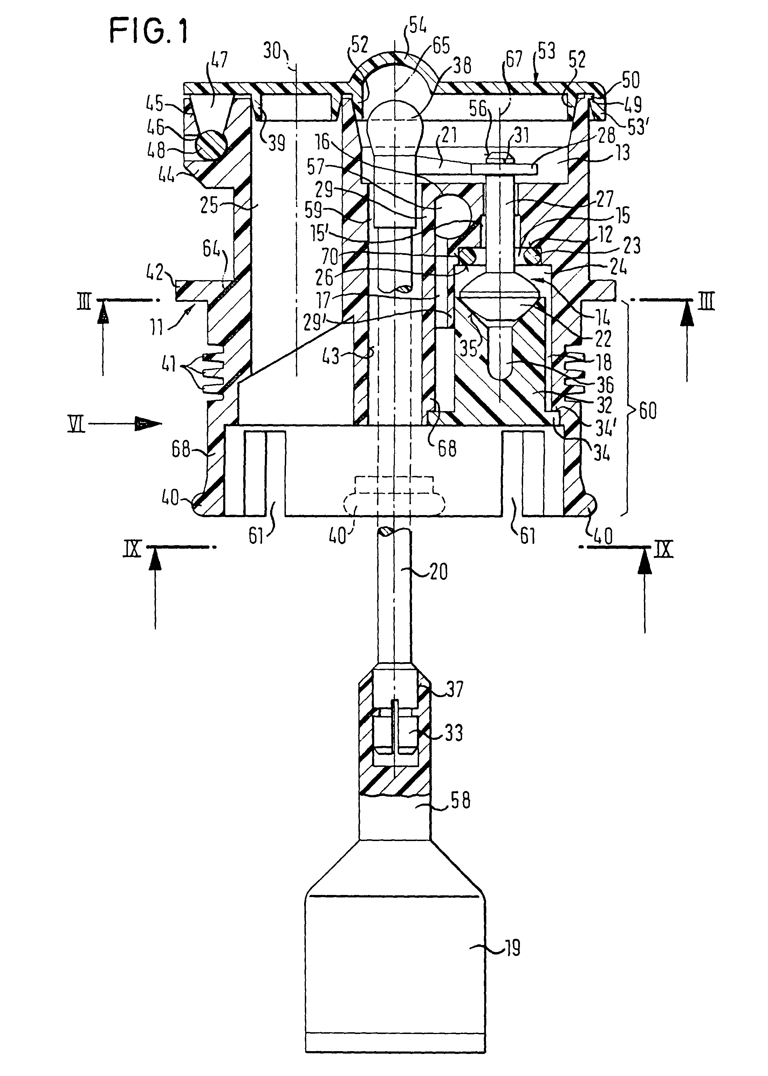

Nach Figur 1, 2, 6 und 7 weist ein im wesentlichen topfförmiges Stopfengehäuse 11 unten radial außen über den Umfang verteilt mehrere Haltelippen 40 und darüber drei konzentrische Dichtringe 41 auf, mittels denen das in eine nicht dargestellte Batteriegehäuseöffnung eingesteckte Stopfengehäuse 11 dicht und vertikal fest in dieser Öffnung angebracht werden kann. Im mittleren Bereich ist das Stopfengehäuse 11 mit einer quer zu seiner Mittelachse 65 angeordneten, ebenen Deckplatte 64 versehen, die von einem Ringflansch 42 umgeben ist, der gewährleistet, daß das Stopfengehäuse 11 nur bis zum Anschlagen des Ringflansches 42 an einer Gegenfläche des nicht dargestellten Batteriegehäuses in die zugeordnete Öffnung eingesteckt werden kann. Aufgrund von nach unten offenen Axialschlitzen 61 kann der untere Randbereich des Stopfengehäuses 11 beim Einsetzen in eine Batterieöffnung radial nach innen federn, wodurch die Haltelippen 40 in eine am Batteriegehäuse radial außen von der Öffnung vorgesehene komplementäre Umfangsnut einschnappen können, wodurch der Wassernachfüllstopfen sicher am Batteriegehäuse gehalten wird.

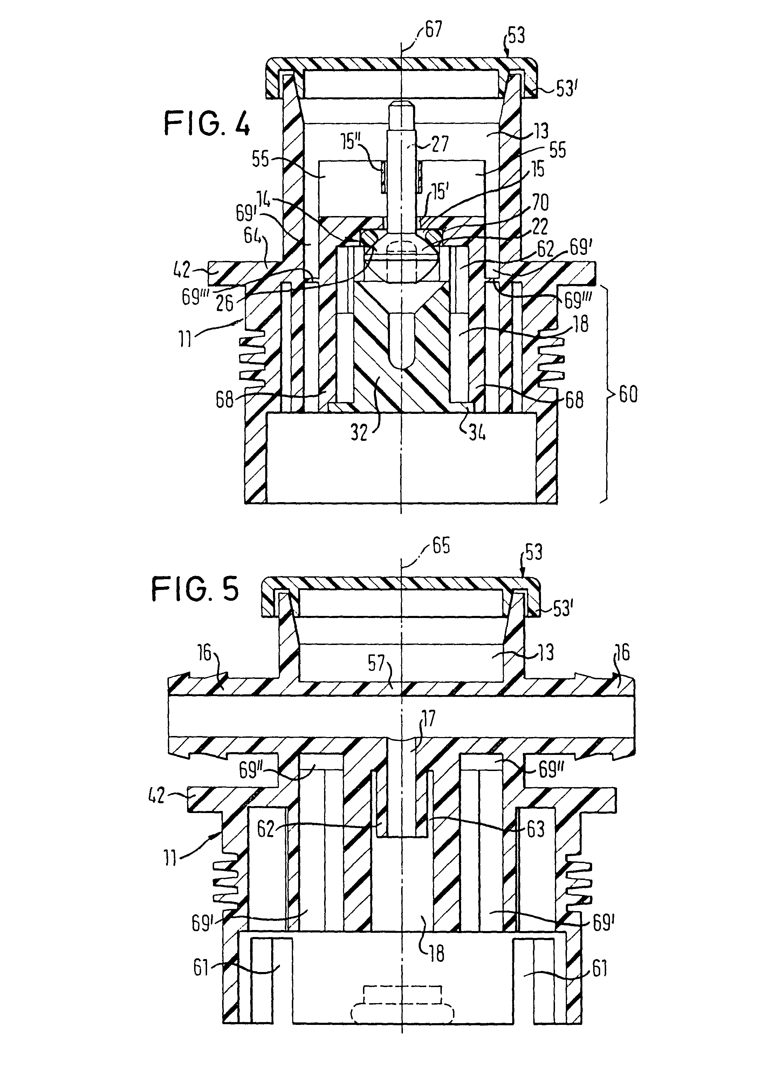

Während der unterhalb der Deckplatte 64 befindliche Verbindungsbereich 60 des Stopfengehäuses 11 in die nicht dargestellte Batterieöffnung eingesteckt ist und die Verbindung mit diesem herstellt, steht der oberhalb der Deckplatte 64 vorhandene Bereich des Stopfengehäuses 11 nach oben vor. In diesem Bereich münden nach den Figuren 5, 6 und 8 seitlich im Stopfengehäuse 11 Rohrstutzen 16, die einstückig mit dem Stopfengehäuse 11 sind, miteinander fluchten und in einen sie verbindenden Durchflußkanal 57 (Figur 5) übergehen, der ebenfalls in das Stopfengehäuse 11 integriert ist und nach den Figuren 1, 2, 7 und 8 gegenüber der Mittelachse 65 des zumindest im unteren Bereich im wesentlichen kreiszylindrisch ausgebildeten Stopfengehäuses 11 radial versetzt ist. Auch die Rohrstutzen 16 verlaufen senkrecht zur Mittelachse 65.

Der Verbindungsbereich 60 kann auch zur Anbringung in einen nicht dargestellten Adapter ausgebildet sein, der dann seinerseits dicht in die Batterieöffnung eingebracht werden kann.

Nach Figur 1, 2 und 5 zweigt vom Durchflußkanal 57 in der Mitte nach unten ein eine Strömungsverbindung herstellender Verbindungskanal 17 ab, der nach den Figuren 1, 2, 3, 5 in einem Materialvorsprung 29' am Rande einer einen wesentlich größeren Durchmesser aufweisenden, unten offenen Bohrung 18 mit zur Mittelachse 65 paralleler Exzenterachse 67 vorgesehen ist und in deutlichem Abstand vom unteren Ende der Bohrung 18 mündet. Die Bohrung 18 geht oben in eine von weiter unten beschriebenen Axialrippen 62 umgebene Ventilkammer 24 über und stellt einen Wassereinlaß für letztere dar. Die Bohrung 18 und die Ventilkammer 24 sind exzentrisch zur Mittelachse 65 angeordnet und bezüglich der parallel zur Mittelachse 65 verlaufenden Exzenterachse 67 im wesentlichen kreiszylindrisch ausgebildet. Von unten ist in die Bohrung 18 ein Anschlagzapfen 32 mit derart geringerem Durchmesser als die Bohrung 18 eingesetzt, daß rund um den Anschlagzapfen 32 ein Wasseraufnahme- und - Durchlaßraum vorliegt. Unten besitzt der Anschlagzapfen 32 einen Ringflansch 34, der in eine dazu passende Vertiefung 34' eingesetzt ist und die Bohrung 18 von unten dicht verschließt. Mit den angrenzenden Gehäuseteilen 68 ist der Ringflansch 34 beispielsweise durch Ultraschallschweißung fest und dicht verbunden.

Nach den Figuren 1 bis 3 geht die Ventilkammer 24 oben über eine radial nach innen vorspringende Ringstufe 12, die eine Wasserzulauföffnung (15) umgibt, in eine vertikale Bohrung 15' mit verringertem Durchmesser über, in welcher die Ventilstange 27 eines in der Ventilkammer 24 angeordneten Ventilkörpers 22 vertikal verschiebbar und mit allseitigem Spiel angeordnet ist. Auf der Ringstufe 12 liegt ein O-Ring 23 auf, welcher zusammen mit der Ringstufe 12 einen Ventilsitz 26 für den Ventilkörper 22 bildet und einen solchen radialen Abstand von der Ventilstange 27 aufweist, daß dazwischen die Wasserzulauföffnung 15 vorliegt. Bevorzugt ist die Ringstufe 12 an einer O-Ring-Aufnahmevertiefung 70 ausgebildet, welche einen deutlich kleineren Durchmesser als die Ventilkammer 24 aufweist, so daß auch von dieser aus ein stufenförmiger Übergang in die O-Ring-Aufnahmevertiefung 70 vorliegt. Erfindungsgemäß ist die O-Ring-Aufnahmevertiefung 70 so dimensioniert, daß sie den O-Ring 23 sowohl in radialer als auch in axialer Richtung passend aufnimmt.

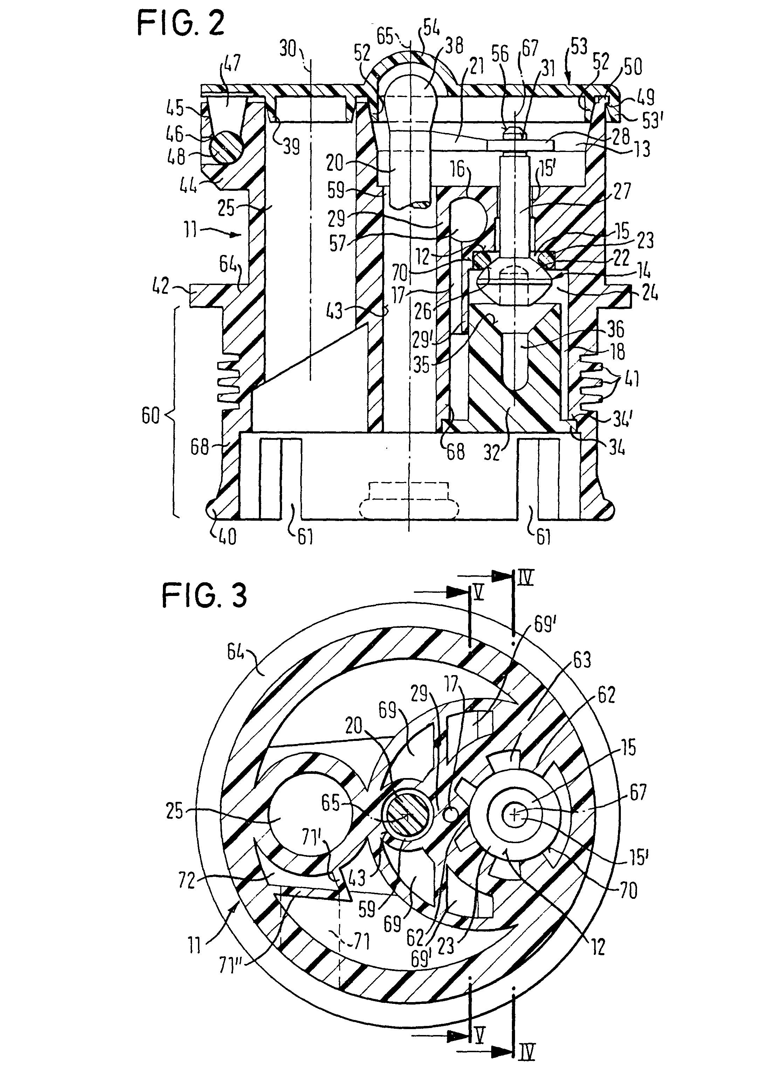

Der obere Bereich der Ventilstange 27 tritt oberhalb der Bohrung 15' im vertikalen Abstand von dieser durch eine Führungsmanschette 15" (Fig. 4) hindurch in eine dort vorgesehene Wasserkammer 13 ein. Am oberen Ende ist die Ventilstange 27 in vertikaler Richtung bis auf die herstellungsbedingte Toleranzen formschlüssig mit einem Querstück 21 verbunden, das sich radial bis über eine zentrale vertikale Aufnahmebohrung 43 erstreckt und von dessen radial innerem Ende sich eine Schwimmerstange 20 mit allseitigem Spiel 59 gegenüber der Innenwand der Aufnahmebohrung 43 nach unten deutlich über den unteren Rand des Stopfengehäuses 11 hinaus bis in das nicht dargestellte Batteriegehäuse hineinerstreckt. Aufgrund des Spiels 59 zwischen der Schwimmerstange 20 und der Wand der Aufnahmebohrung 43 liegt zwischen der oberhalb der Bohrung 15' vorhandenen Wasserkammer 13 und dem unteren Ende des Stopfengehäuses 11 eine Strömungsverbindung vor. Vorteilhafter ist es jedoch, wenn sich gemäß Figur 3 beidseits neben der Aufnahmebohrung 43 noch ein bzw. mehrere sich im wesentlichen vertikal erstreckendes Wasserdurchlaufkammern 69 vorgesehen sind, die oben mit der Wasserkammer 13 und unten mit dem Inneren der Batteriezelle in Strömungsverbindung stehen, auf die der Nachfüllstopfen aufgesetzt ist. Erfindungsgemäß sind oberhalb der Bohrung 15' zwei seitliche Kanalstücke 55 vorgesehen, die oben zur Wasserkammer 13 hin offen sind und radial außen mit weiteren, sich im wesentlichen vertikal erstreckenden Wasserdurchlaufkammern 69' verbunden sind. Unterhalb des Durchflußkanals 57 weist der obere Teil der Wasserdurchlaufkammer 69' einen Zwischenboden 69"' (Figur 4) auf, an dem er über eine Durchlauföffnung 69" (Fig.5) in den versetzten unteren Teil übergeht. Vorzugsweise sollen die Böden der Kanalstücke 55 und die oberen Eintrittsöffnungen der Wasserdurchlaufkammern 69' unterhalb des Niveaus der oberen Berandung des Durchflußrands 57 liegen, so daß das Wasser bevorzugt dort hindurchfließt.

Am unteren Ende ist die Schwimmerstange 20 mit einem Kupplungsstück 33 versehen, welches in eine Ausnehmung 37 am oberen Ende einer stangenförmigen Verlängerung 58 eines Schwimmers 19 eingreift. Die Länge der Schwimmerstange 20 ist so gewählt, daß bei in eine Batterieöffnung eingesetzten Stopfengehäuse 11 und der richtigen Elektrolytfüllung der Batterie der Schwimmer 19 gerade so weit in den Elektrolyten eintaucht, daß er aufschwimmt und über die Schwimmerstange 20, das Querstück 21 und die Ventilstange 27 den Ventilstößel 22 in die in Figur 2 dargestellte Schließstellung anhebt, in welcher der Ventilkörper 22 auf dem O-Ring 23 dicht aufliegt.

Wie besonders gut aus Figur 3 und 4 zu erkennen ist, erstrecken sich von der Ringstufe 12 axial nach unten rund um die exzentrische Achse 67 und um den Ventilkörper 22 Axialrippen 62, zwischen denen Axialnuten 63 vorgesehen sind, und zwar über eine solche Länge, daß eine axiale Überlappung mit dem Anschlagzapfen 32 erfolgt. Die radiale Erstreckung des Anschlagzapfens 32 nach innen ist gerade so groß, daß sie zusammen den Anschlagzapfen 32 auf der Exzenterachse 67 festlegen, ihn also diesbezüglich einwandfrei zentrieren. In Richtung auf die Bohrung 15' zu erstrecken sich die Axialrippen 62 bis zum Beginn der O-Ring-Aufnahmevertiefung 70. Radial innen enden die Axialrippen 62 etwas vor dem Außendurchmesser der O-Ring-Aufnahmevertiefung 70.

Im geöffneten Zustand des durch den Ventilkörpers 22 und den Ventilsitz 26 gebildeten Ventils 14 (Figur 1) bildet der Ringraum zwischen dem Ventilsitz 26 und dem Ventilkörper 22 eine Wasserzulauföffnung 15, an die oben die Vertikalbohrung 15' anschließt.

Analog wie beim eingangs erwähnten Stand der Technik weist das Querstück 21 radial außen eine Gabel 28 mit federnden Zinken auf, die in eine Nut 31 am oberen Ende der Ventilstange 27 formschlüssig so eingreifen, daß der Ventilkörper 22 den Vertikalbewegungen des Schwimmers 19 mit Ausnahme herstellungsbedingter Toleranzen folgt. Der Ventilkörper 22 mit der Ventilstange 27 soll sich also nicht unabhängig von dem Schwimmer 19 und der Schwimmerstange 20 auf- und abbewegen können.

Wie man aus den Figuren 1 und 2 erkennt, ist die Ventilstange 27 oben mit einer nach oben sich verjüngenden Abschrägung 56 versehen, aufgrund der die Gabel 28 des Querstücks 21 auch von oben auf das obere Ende der Ventilstange 27 aufgeschnappt werden kann. Dies ist deswegen von Bedeutung, weil wegen der axialen Führung der Ventilstange 27 in der Bohrung 15' und der Schwimmerstange 20 in der Aufnahmebohrung 43 eine seitliche Verschiebung der beiden Stangen 20, 27 gegeneinander trotz des in den Bohrungen vorhandenen Spiels nur in beschränktem Maße möglich ist.

Der Durchflußkanal 57 und der Verbindungskanal 17 sind nach den Figuren 1 bis 3 durch ein Wandstück 29 von der zentralen Aufnahmebohrung 43 dicht abgetrennt.

Auf der der Ventilkammer 24 diametral gegenüberliegenden Seite des Stopfengehäuses 11 ist eine Diagnoseöffnung 25 mit einer parallel zur Mittelachse 65 verlaufenden Exzenterachse 30 vorgesehen, welche axial von außen nach innen durchgeht und durch welche zur Feststellung des Ladezustandes Säureproben aus der Batterie entnommen werden können.

Die unmittelbar unter der den Ventilkörper 22 enthaltenden Ventilkammer 24 befindliche Bohrung 18 ist vor dem Zusammenbau unten offen, so daß von dort sowohl der O-Ring 23 als auch der Ventilkörper 22 mit der Ventilstange 27 eingesetzt werden können. Anschließend wird dann in die Bohrung 18 von unten der Anschlagzapfen 32 eingesetzt, bis er in die Ringanordnung von Axialrippen 62 eingedrungen und der Ringflansch 34 dicht in die Vertiefung 34' an den Gehäuseteilen 68 eingesetzt ist. Anschließend wird der Ringflansch 34 beispielsweise durch Ultraschallschweißung in der aus den Figuren 1 und 2 ersichtlichen Endposition integral mit dem Stopfengehäuse 11 verbunden.

An seinem oberen Ende ist der Anschlagzapfen 32 mit einem sich trichterartig nach unten verjüngenden Sitz 35 versehen, an welchem der Ventilkörper 22 in der aus Figur 1 ersichtlichen geöffneten Stellung des Ventils 14 anschlägt.

An seinem unteren Ende geht der trichterförmige Sitz 35 in eine koaxial zur Exzenterachse 68 verlaufende Sackbohrung 36 über.

Oben ist das Stopfengehäuse 11 dicht durch einen Deckel 53 verschlossen, der zumindest in seinem zentralen Bereich aus transparentem Material bestehen sollte, so daß durch einen oberhalb der Schwimmerstange 20 vorgesehenen Anzeigedom 54 hindurch der Stand des oberen Endes 38 der Schwimmerstange 20 beobachtet werden kann.

Der Deckel 53 verschließt dicht von oben sowohl die Wasserkammer 13 als auch die Diagnoseöffnung 25, wozu unten an den Deckel 53 hohlzylindrische Vorsprünge 39, 52 derart angeordnet sind, daß sie dicht in die oberen Enden der Diagnoseöffnung 25 bzw. der kreiszylindrischen Wasserkammer 13 eingreifen. Rundum ist der Deckel 53 außer im Bereich eines Scharniers 46, 47, 48 mit einem nach unten vorstehenden Deckelrand 53' versehen.

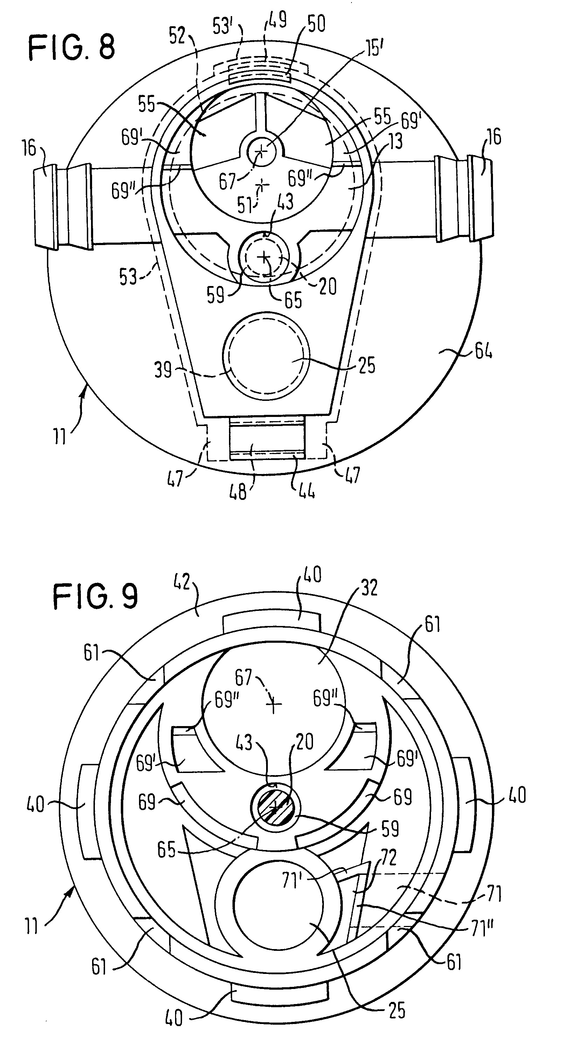

Weiter ist oben radial außen am Stopfengehäuse 11 eine nach oben offene kanalförmige Halterung 44 ausgeformt, deren sich V-förmig nach oben etwas erweiternder Einsetzkanal 45 unten mit einer Verrastung 46 versehen ist, in welche zur Bildung des Scharniers ein über Zwischenglieder 47 (siehe auch Figur 8) am Deckel befestigter Rastzapfen 48 lösbar einschnappen kann, wie das in den Figuren 1 und 2 gezeigt ist. An dem dem Rastzapfen 48 diametral gegenüberliegenden Ende greift der Deckelrand mit einer Hinterschneidung 49 hinter einen oder vorzugsweise mehrere radiale Rastvorsprünge 50 am oberen Ende des Stopfengehäuses 11. Eine dort vorgesehene, nur in Fig. 8 angedeutete Handhabe 53" erleichert das Öffnen und Schließen des Deckels 53. Bevorzugt sind beidseits der in Fig. 8 gezeigten Position zwei Rastvorrichtungen 49, 50 und Handhaben 53" vorgesehen.

Wie bereits erwähnt, weist der Deckel 53 oberhalb der kreiszylindrischen Wasserkammer 13, deren Mittelpunkt 51 (Figur 8) zwischen den Achsen 65, 67 liegt, einen dazu komplementären hohlzylindrischen Vorsprung 52 (Figur 1, 2) auf, mit welchem der Deckel im aufgeschnappten Zustand gemäß den Figuren 1 und 2 dicht am oberen Rand der Wasserkammer 13 anliegt.

In Figur 8 ist der Deckel 53 mit den Rastvorsprüngen 50, dem dichtenden Ringvorsprung 52, dem dichtenden Ringvorsprung 39 sowie den Zwischengliedern 47 und dem sich dazwischen erstreckenden Rastzapfen 48 nur gestrichelt angedeutet, um auch die darunterliegenden Bauelemente sichtbar zu machen.

Die Herstellung des erfindungsgemäßen Wassernachfüllstopfens geht wie folgt vor sich:

Zunächst werden das Stopfengehäuse 11, der Deckel 53, der Ventilkörper 22 mit der Ventilstange 27, das Querstück 21 mit der Schwimmerstange 20, der Schwimmer 19 und der Anschlagzapfen 32 gesondert, z.B. nach dem Kunststoff-Spritzgußverfahren hergestellt. Der erfindungsgemäße Wassernachfüllstopfen wird also aus nur fünf Einzelteilen zusammengebaut, zu denen dann noch der ebenfalls vorgefertigte Schwimmer 19 und der O-Ring 23 kommt.

Anschließend wird nach Einbringen des O-Ringes 23 in die O-Ring-Aufnahmevertiefung 70 der Ventilkörper 22 mit der Ventilstange 27 bei noch nicht eingesetztem Anschlagzapfen 32 von unten in die Bohrung 18 eingebracht, wobei die Ventilstange 27 durch den Vertikalkanal 15' hindurchgeführt wird, bis das obere Ende der Ventilstange 27 mit der Nut 31 sich innerhalb der Wasserkammer 13 befindet. Nunmehr wird die Schwimmerstange 20 mit dem daran befestigten Querstück 21 von oben in die Aufnahmebohrung 43 eingeführt und die Gabel 28 über die Abschrägung 56 in die Nut 31 an der Ventilstange 27 eingerastet. Anschließend wird auf das untere Ende der Ventilstange 20 gemäß Figur 1 der Schwimmer 19 von unten aufgeschnappt.

Zuvor ist vorzugsweise unmittelbar nach dem Einbringen des Ventilkörpers 22 in die Ventilkammer 24 der Anschlagzapfen 32 von unten in die Bohrung 18 bis in die Ringanordnung von Axialrippen 62 eingeführt worden, worauf der Ringflansch 34 mit den Gehäuseteilen 68 des Material des Stopfengehäuses 11 ultraschallverschweißt worden ist.

Nunmehr muß lediglich noch der Deckel 53 oben auf das Stopfengehäuse 11 aufgeschnappt werden, um den Wassernachfüllstopfen betriebsbereit zu machen.

Er kann anschließend unmittelbar oder über einen geeigneten Adapter in eine Batterieöffnung eingesetzt werden, wobei der Schwimmer 19 mehr oder weniger in den in der Batterie befindlichen flüssigen Elektrolyten eintaucht.

Anschließend werden dann Wasserzufuhr- bzw. Abfuhr-Schläuche auf die Rohrstutzen 16 (Figuren 5, 6, 8) aufgesetzt. Über die Rohrstutzen 16 können mehrere Wassernachfüllstopfen miteinander verbunden und von einer einzigen Quelle für destilliertes Wasser versorgt werden.

Werden die Rohrstutzen 16 und damit der Durchflußkanal 57 (Figur 5) von destilliertem Wasser durchströmt, so tritt dieses auch durch den Verbindungskanal 17 in den unteren Teil des Ringraumes zwischen den Außenwänden der Bohrung 18 und des Anschlagzapfens 32 ein (Fig. 1, 2) und strömt von dort nach oben in die Axialnuten 63 und die Ventilkammer 24 ein, dann bei gemäß Figur 1 geöffnetem Ventil 14 am Ventilkörper 22 vorbei über die Wasserzulauföffnung 15, den zwischen der Bohrung 15' und der Ventilstange 27 vorhandenen Ringraum sowie die beiden seitlichen Kanalstücke 55 in die oberen Enden der Wasserdurchlaufkammern 69' ein. Zusätzlich kann über den Durchflußkanal 57 steigendes Wasser auch in die Wasserdurchlaufkammer 69 und das obere Ende der Aufnahmebohrung 43 gelangen. Das Wasser strömt dann vertikal durch die Wasserdurchlaufkammern 69, 69' bzw. durch den zwischen der Schwimmerstange 20 und der Wand der Aufnahmebohrung 43 vorhandenen Ringraum 59 nach unten in das Batteriegehäuse. Entsprechend wird der flüssige Elektrolyt im Batteriegehäuse mit destilliertem Wasser aufgefüllt.

Hierdurch steigt der Schwimmer 19 mit steigendem Flüssigkeitsspiegel im Batteriegehäuse an, wobei der Ventilkörper 22 über die Schwimmerstange 20, das Querstück 21 und die Ventilstange 27 mitgenommen wird, bis er sich schließlich auf den Ventilsitz 26 aufsetzt (Figur 2), wodurch die Strömungsverbindung zwischen dem Durchflußkanal 57 und der Wasserkammer 13 unterbrochen und ein weiterer Zufluß von destilliertem Wasser in die betreffende Zelle des Batteriegehäuses unterbunden wird. Es erfolgt jedoch weiter eine Wasserströmung durch die Rohrstutzen 16 und den Durchflußkanal 57 hindurch zu den übrigen hintereinandergeschalteten Wassernachfüllstopfen, wo jeweils die erforderliche Flüssigkeitsmenge individuell und durch den jeweiligen Schwimmer 19 gesteuert entnommen wird. In der Ventilkammer 24 und den Zuleitungen bleibt stets eine gewisse Wassermenge stehen, welche eine Gasdichtung bildet.

Der Verbindungskanal 17 sowie die Bohrung 18 mit der darüber befindlichen Ventilkammer 24 und den Axialnuten 63 bilden einen siphonartigen Verschluß für Gase, die in der mit dem Nachfüllstopfen verschlossenen Batteriezelle entstehen.

Des weiteren wird durch die sich von der Ventilkammer 24 nach unten erstreckende Bohrung 18 und den in dieser von oben mündenden Verbindungskanal 17 erreicht, daß in der Ventilkammer 24 und den Axialnuten 63 eine im wesentlichen von unten nach oben verlaufende Wasserströmung vorliegt. Wesentlich ist, daß die Axialrippen 62 sich nach unten nicht bis in die Bohrung 18 hineinerstrecken, damit im Bereich der Bohrung 18 die durch den Verbindungskanal 17 zugeführte Flüssigkeit sich gleichmäßig rund um den Anschlagzapfen 32 verteilen kann.

Nach Figur 8 erstrecken sich vom oberen Ende der Bohrung 15' nach entgegengesetzten Richtungen seitlich die Kanalstücke 55 zum oberen Ende der vertikalen Wasserdurchlaufkammern 69', die unten in dem Raum oberhalb des Inneren der Batteriezelle münden. Aufgrund dieser Ausbildung strömt das Wasser bevorzugt durch die Kanalstücke 55 und die Wasserdurchlaufkammer 69' in die Batteriezellen ein. Grundsätzlich stehen aber auch die weiteren Wasserdurchlaufkammern 69 und der Ringraum 59 um die Schwimmerstange 20 herum für die Wasserführung zur Batteriezelle zur Verfügung.

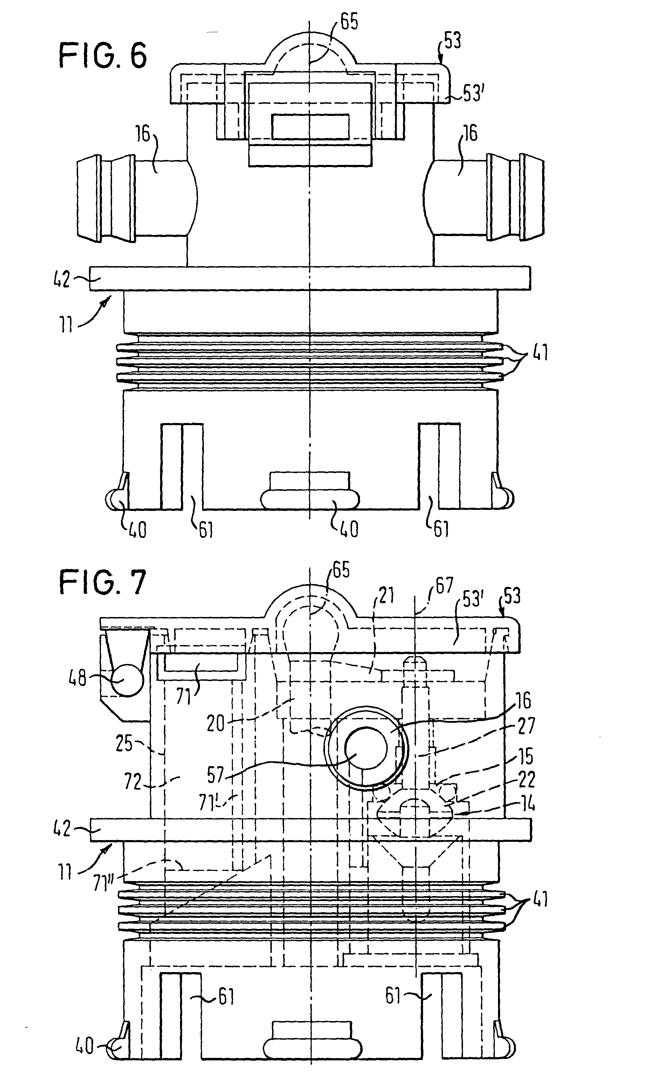

Nach Figur 7 und 9 ist im oberen Teil des Stopfengehäuses 11 teilweise vom Deckelrand 53' abgedeckt seitlich eine Gasaustrittsöffnung 71 vorgesehen, welche innen an einen vertikalen Gasleitkanal 72 (Fig. 9) angrenzt, der unten mit dem Batterie-Innern in Verbindung steht. Begrenzt ist der Gasleitkanal 72 seitlich außer von der Umfangswand der Diagnoseöffnung 25 bzw. Stopfengehäuses 11 von einer Kanalwand 71' und einem Kanalwandstück 71", die sich zweckmäßig bis zum unteren Rand der Diagnoseöffnung 25 erstrecken. Da der Gasleitkanal 72 von der Wasserkammer 13 getrennt ist, kann die Entgasung unabhängig von der Wasserzufuhr erfolgen. Die Gasaustrittsöffnung 71 kann auch oben und/oder unten in einer Einsenkung der Umfangswand des Stopfengehäuses 11 vorgesehen sein, um das Nach-Außen-Dringen von Spritzern zu erschweren.

Für ein und denselben Wassernachfüllstopfen können verschiedene Schwimmer- und Schwimmerstangentypen vorgesehen sein, die zweckmäßigerweise mit unterschiedlichen Farben gekennzeichnet sind und sich für jeweils eine individuelle Batterieart eignen.

Das Gehäuse, welches in einen Adapter eingesteckt wird, ist unterhalb der Deckplatte 64 so ausgebildet, daß es in die dazu komplementäre Adapteröffnung paßt.

### Bezuaszeichenliste

- 11: Stopfengehäuse
- 12: Ringstufe
- 13: Wasserkammer
- 14: Ventil
- 15: Wasserzulauföffnung
- 15': Bohrung
- 15": Führungsmanschette
- 16: Rohrstutzen
- 17: Verbindungskanal (Strömungsverbindung)
- 18: Wassereinlaß
- 19: Schwimmer
- 20: Schwimmerstange
- 21: Querstück
- 22: Ventilkörper
- 23: O-Ring
- 24: Ventilkammer
- 25: Diagnoseöffnung
- 26: Ventilsitz
- 27: Ventilstange
- 28: Gabel
- 29: Wandstück
- 29': Materialvorsprung
- 30: Exzenterachse
- 31: Nut
- 32: Anschlagzapfen
- 33: Kupplungsstück
- 34: Ringflansch
- 34': Vertiefung
- 35: Sitz
- 36: Sackbohrung
- 37: Ausnehmung
- 38: oberes Ende der Schwimmerstange
- 39: Vorsprung
- 40: Halterlippe
- 41: Dichtring
- 42: Ringflansch
- 43: Aufnahmebohrung
- 44: Halterung
- 45: Einsetzkanal
- 46: Verrastung
- 47: Zwischenglied
- 48: Rastzapfen
- 49: Hinterschneidung
- 50: Rastvorsprung
- 51: Mittelpunkt
- 52: Vorsprung
- 53: Deckel
- 53': Deckelrand
- 53": Handhabe
- 54: Anzeigedom
- 55: Kanalstück
- 56: Abschrägung
- 57: Durchflußkanal
- 58: stangenförmige Verlängerung
- 59: Spiel
- 60: Verbindungsbereich
- 61: Axialschlitz
- 62: Axialrippen
- 63: Axialnuten
- 64: Deckplatte
- 65: Mittelachse
- 66: Diagnoseöffnung
- 67: Exzenterachse
- 68: Gehäuseteile
- 69: Wasserdurchlaufkammer
- 69': Wasserdurchlaufkammer
- 69": Durchlauföffnung
- 69"': Zwischenboden
- 70: O-Ring-Aufnahmevertiefung
- 71: Gasaustrittsöffnung
- 71': Kanalwand
- 71": Kanalwandstück
- 72: Gasleitkanal

## Patentansprüche

1. Wassernachfüllstopfen für eine flüssigen Elektrolyten enthaltende Batterie mit einem Stopfengehäuse (11), welches im unteren Bereich außen entweder komplementär zu einer oberen Batteriegehäuseöffnung oder einem Adapter ausgebildet ist, der seinerseits komplementär zu einer oberen Batteriegehäuseöffnung gestaltet ist, mit einer oben am Stopfengehäuse (11) angeordneten, nach außen abgeschlossenen, vorzugsweise kreiszylindrischen und/oder oben einen insbesondere abnehmbaren Deckel (53) aufweisenden Wasserkammer (13), welche an eine durch ein aus einem Ventilkörper (22) und einem Ventilsitz (26) bestehendes, einen vorzugsweise als Bohrung ausgebildeten Wassereinlaß (18) besitzendes Ventil (14) verschließbare Wasserzulauföffnung (15) angeschlossen ist und wenigstens eine Strömungsverbindung (59, 69, 69') mit demjenigen Bereich des Stopfengehäuses (11) aufweist, der nach dem Einsetzen in eine Batteriegehäuseöffnung mit dem Innenraum der Batterie in Strömungsverbindung steht, mit wenigstens einem am Stopfengehäuse (11) angeordneten Rohrstutzen (16), an den ein Wasserzuführschlauch ansetzbar ist und welcher in Strömungsverbindung (17) mit dem Wassereinlaß (18) steht, mit einem sich durch eine vorzugsweise zentrale Aufnahmebohrung (43) des Stopfengehäuses (11) erstreckenden, unten aus dem Stopfengehäuse (11) herausragenden Schwimmer (19), der über eine Schwimmerstange (20) und ein an derem oberen Ende vorgesehenes Querstück (21) sowie eine Ventilstange (27) mit dem Ventilkörper (22) verbunden ist, wobei der Ventilsitz (26) und die Wasserzulauföffnung (15) an bzw. in einem Teil des Stopfengehäuses (11) ausgebildet sind, d.h. einen integrierenden Bestandteil des Stopfengehäuses (11) bilden und wobei sich die Ventilstange (27) vom Ventilkörper (22) durch eine vorzugsweise oben an die Ventilkammer (24) anschließende Bohrung (15') im Stopfengehäuse (11) zum Querstück (21) erstreckt, welche einen größeren Durchmesser als die Ventilstange (27) aufweist, so daß rund um die Ventilstange (27) ein Ringraum vorgesehen ist, der einen an die Wasserzulauföffnung (15) anschließenden Wasserzulaufkanal bildet,
**dadurch gekennzeichnet,**
**daß** rund um die Bohrung (15') für die Ventilstange (27) und/oder darüber ein oder mehrere Kanalstücke (55) angeordnet sind, die oben zur Wasserkammer (13) hin offen sind und seitlich in eine bzw. mehrere Wasserdurchlaufkammern (69') übergehen, deren unteres Ende mit der zugeordneten Batteriezelle in Strömungsverbindung steht.

2. Wassernachfüllstopfen nach Anspruch 1,
**dadurch gekennzeichnet,**
die Wasserdurchlaufkammer(n) (69') in einen oberen und einen dagegen versetzten unteren Teil unterteilt ist und die beiden Teile durch eine an einem Zwischenboden (69"') gebildeten Öffnung (69") miteinander verbunden sind.

3. Wassernachfüllstopfen nach Anspruch 1 oder 2,
**dadurch gekennzeichnet,**
**daß** außerhalb der Aufnahmebohrung (43) für die Schwimmerstange (20) ein oder mehrere Wasserdurchlaufkammern (69) vorgesehen sind, die oben mit der Wasserkammer (13) und unten mit demjenigen Bereich des Stopfengehäuses (11) in Strömungsverbindung stehen, welcher an den Innenraum der Batteriezelle anschließt, die mit dem Wassernachfüllstopfen verschlossen ist.

4. Wassernachfüllstopfen nach einem der vorhergehenden Ansprüche,
**dadurch gekennzeichnet,**
**daß** im Stopfengehäuse (11) eine einseitig, vorzugsweise oben durch den Ventilsitz (26) begrenzte Ventilkammer (24) ausgebildet ist, in der der Ventilkörper (22) auf den Ventilsitz (26) zu bzw. von ihm beweglich und vorzugsweise geführt angeordnet ist.

5. Wassernachfüllstopfen nach einem der vorhergehenden Ansprüche,
**dadurch gekennzeichnet,**
**daß** der diskusartig ausgebildete Ventilkörper (22) rundum von sich in Bewegungsrichtung des Ventilkörpers (22) erstreckenden Axialrippen (62) und dazwischen befindlichen Axialnuten (63) umgeben ist, die vorzugsweise radial außen unmittelbar an das Stopfengehäuse (11) angrenzen.

6. Wassernachfüllstopfen nach Anspruch 5,
**dadurch gekennzeichnet,**
**daß** der Wassereinlaß (18) des Ventils (14) als unterhalb der Ventilkammer (24) und ggf. der Axialrippen (62) angeordnete Bohrung (18) ausgebildet ist, in welche vorzugsweise in deutlichem Abstand von der Ventilkammer (24) die Strömungsverbindung (17) insbesondere am Rand mündet und welche bevorzugt durch einen von unten eingesteckten Anschlagzapfen (32) mit geringerem Durchmesser als die Bohrung (18) unten dicht verschlossen ist.

7. Wassernachfüllstopfen nach einem der vorhergehenden Ansprüche,
**dadurch gekennzeichnet,**
**daß** die Ventilkammer (24) derart dimensioniert ist, daß vor Einbringen des Anschlagzapfens (32) der Ventilkörper (22) ggf. mit O-Ring (23) montiert werden kann.

8. Wassernachfüllstopfen nach Anspruch 7,
**dadurch gekennzeichnet,**
**daß** der Anschlagzapfen (32) vorzugsweise oben einen insbesondere trichterförmigen Sitz (35) für den sich in Offenstellung befindlichen Ventilkörper (22) aufweist.

9. Wassernachfüllstopfen nach einem der vorhergehenden Ansprüche,
**dadurch gekennzeichnet,**
**daß** die Ventilkammer (24) und die vorzugsweise mit ihr konzentrische Bohrung (18) exzentrisch im kreisförmigen Stopfengehäuse (11) angeordnet ist und einen vorzugsweise um mehr als die Hälfte geringeren Durchmesser als das Stopfengehäuse (11) aufweist.

10. Wassernachfüllstopfen nach einem der vorhergehenden Ansprüche,
**dadurch gekennzeichnet,**
**daß** die Aufnahmebohrung (43) für die Schwimmerstange (20) vorzugsweise zumindest im wesentlichen zentral und koaxial im Stopfengehäuse (11) angeordnet ist.

11. Wassernachfüllstopfen nach Anspruch 9 oder 10,
**dadurch gekennzeichnet,**
**daß** diametral gegenüber der Ventilkammer (24) eine von außen nach innen durchgehende axiale Diagnoseöffnung (25) vorgesehen ist, durch welche Säure zur Feststellung des Ladezustandes entnommen werden kann.

12. Wassernachfüllstopfen nach Anspruch 11,
**dadurch gekennzeichnet,**
**daß** die Diagnoseöffnung (25) und die Wasserkammer (13) durch einen gemeinsamen abnehmbaren Deckel (53) von außen dicht verschlossen sind.

13. Wassernachfüllstopfen nach einem der vorhergehenden Ansprüche,
**dadurch gekennzeichnet,**
**daß** der bzw. die Rohrstutzen (16) einstückig mit dem Stopfengehäuse (11) ausgebildet ist bzw. sind und vorzugsweise senkrecht zur Mittelachse (65) des Stopfengehäuses (11) verlaufen.

14. Wassernachfüllstopfen nach Anspruch 13,
**dadurch gekennzeichnet,**
**daß** ein und vorzugsweise zwei entgegengesetzt gerichtete Rohrstutzen (16) radial zwischen der Ventilkammer (24) und der Schwimmstangen-Aufnahmebohrung (43) sowie axial oberhalb der Ventilkammer (24) vorzugsweise seitlich der Ventilstange (27) vorgesehen sind.

15. Wassernachfüllstopfen nach Anspruch 14,
**dadurch gekennzeichnet,**
**daß** die Rohrstutzen (16) in einen mit ihnen fluchtenden, im Stopfengehäuse (11) vorgesehenen Durchflußkanal (57) übergehen, von dem vorzugsweise in der Mitte und insbesondere senkrecht ein Verbindungskanal (17) abzweigt, der in einem seitlichen Materialvorsprung (29') am Rande der Bohrung (18) vorgesehen ist und sich nach unten vorzugsweise bis in den Ringraum zwischen den Außenwänden der Bohrung (18) und des Anschlagzapfens (32) erstreckt, derart, daß das Wasser durch den Verbindungskanal (17) in den betreffenden Ringraum strömt und von dort nach oben in die Ventilkammer (24) und die Axialnuten (63) gelangen kann.

16. Wassernachfüllstopfen nach einem der vorhergehenden Ansprüche,
**dadurch gekennzeichnet,**
**daß** das Stopfengehäuse (11) eine oberhalb des kreiszylindrischen Verbindungsbereiches (60) eine Deckplatte (64) aufweist, an der einstückig sich nach oben und unten erstreckend die Gehäuseteile der Ventilkammer (24), der Ventilstangen-Aufnahmebohrung (43) und der Diagnoseöffnung (66) vorgesehen sind.

17. Wassernachfüllstopfen nach einem der vorhergehenden Ansprüche,
**dadurch gekennzeichnet,**
**daß** die Seitenwände der Ventilkammer (24) durch Teile des Stopfengehäuses (11) gebildet sind, d.h. einen integrierenden Bestandteil des Stopfengehäuses (11) bilden, und die gegebenenfalls vorgesehenen Axialrippen (62) ebenfalls einen integrierenden Bestandteil des Stopfengehäuses (11) bilden.

18. Wassernachfüllstopfen nach einem der vorhergehenden Ansprüche,
**dadurch gekennzeichnet,**
**daß** die Axialrippen (62) sich axial bis in die Höhe des Ventilsitzes (26) erstrecken.

19. Wassernachfüllstopfen nach einem der vorhergehenden Ansprüche,
**dadurch gekennzeichnet,**
**daß** axial zwischen der Ventilkammer (24) und der Ventilstangen-Bohrung (15') eine O-Ring-Aufnahmevertiefung (70) mit kleinerem Durchmesser als die Ventilkammer (24) und größerem Durchmesser als die Bohrung (15') vorgesehen ist.

20. Wassernachfüllstopfen nach Anspruch 19,
**dadurch gekennzeichnet,**
**daß** die gegebenenfalls vorhandenen Axialrippen (62) sich radial nach innen bis kurz vor den oder allenfalls bis zum radial äußeren Rand der O-Ring-Aufnahmevertiefung (70) erstrecken.

21. Wassernachfüllstopfen nach einem der vorhergehenden Ansprüche,
**dadurch gekennzeichnet,**
**daß** in dem oberhalb der Deckplatte (64) liegenden Bereich der Seitenwand des Stopfengehäuses (11) eine oder mehrere Gasaustrittsöffnungen (71) vorgesehen sind, die mit dem zum Batterie-Inneren führenden unteren Hohlraum des Stopfengehäuses (11) in Verbindung steht bzw. stehen, wobei insbesondere der Deckel (53) einen nach unten gerichteten Deckelrand (53') aufweist, der die Gasaustrittsöffnung(en) (71) zumindest teilweise mit Abstand abdeckt.

22. Wassernachfüllstopfen nach Anspruch 21,
**dadurch gekennzeichnet,**
**daß** die Gasaustrittsöffnung (71) innen an einen vorzugsweise vertikalen Gasleitkanal (72) angrenzt, der die Verbindung zum unteren Hohlraum herstellt, wobei bevorzugt eine vertikale Kanalwand (71') und/oder ein vertikales Kanalwandstück (71") den Gasleitkanal (72) zumindest im wesentlichen auf die Größe der Gasaustrittsöffnung(en) (719) einengen und insbesondere nach unten bis in den Hohlraum verlängern, und zwar zweckmäßigerweise bis zum unteren Rand der Diagnoseöffnung (25).

23. Wassernachfüllstopfen nach einem der vorhergehenden Ansprüche,
**dadurch gekennzeichnet,**
**daß** oberhalb der Bohrung (15') für die Ventilstange (27) im vertikalen Abstand von dieser eine Führungsmanschette (15") für die Ventilstange (27) vorgesehen ist, durch die hindurch die Ventilstange (27) in die Wasserkammer (13) gelangt.

24. Wassernachfüllstopfen nach Anspruch 23,
**dadurch gekennzeichnet,**
**daß** die Kanalstücke (55) unmittelbar oberhalb des oberen Endes der Bohrung (15') für die Ventilstange (27) beginnen und nach oben bis zum oberen Ende der Führungsmanschette (15") reichen, wo die darüberliegende Wasserkammer (13) beginnt.

## Claims

1. Water top-up plug for a battery containing a liquid electrolyte, comprising a plug housing (11), which is formed at the outside in the lower region either complementary to an upper battery housing opening or complementary to an adapter, which is in turn designed complementary to an upper battery housing opening, an outwardly closed water chamber (13) arranged at the top of the plug housing (11) and preferably of right cylindrical shape and/or having a cover (53) at the top, in particular a removable cover, the water chamber (13) being connected to a water supply opening (15) which can be closed by a valve (14) consisting of a valve body (22) and a valve seat (26) and having a water inlet (18) preferably formed as a bore and having at least one flow connection (59, 69, 69') to that region of the plug housing (11), which, after insertion into a battery housing opening, is in flow communication with the inner space of the battery, at least one tube stub (16) arranged at the plug housing (11) and onto which a water supply hose can be mounted, the tube stubs (16) standing in flow communication (17) with the water inlet (18), a float (19) which extends through a preferably central receiving bore (43) of the plug housing (11) which projects out of the plug housing (11) at the bottom and which is connected to the valve body (22) via a float rod (20) and a cross-piece (21) provided at its upper end as well as via a valve rod (27), wherein the valve seat (26) and the water supply opening (15) are formed at or in one part of the plug housing (11), i.e. form an integrating component of the plug housing (11), and wherein the valve rod 27 extends from the valve body 22 to the transverse piece (21) through a bore (15') in the plug housing (11) preferably connecting to the valve chamber (24) at the top and having a greater diameter than the valve rod (27) so that a ring space is provided around the valve rod (27) and forms a water supply passage which connects to the water supply opening (15), **characterized in that** one or more passage sections (55) are arranged around the bore (15') for the valve rod (27) and/or above it, which are open towards the water chamber (13) at the top and which merge at the side into one or more water throughflow chambers (69') whose lower end is in flow connection to the associated battery cell.

2. Water top-up plug in accordance with claim 1, **characterized in that** the water throughflow chamber(s) (69') is/are divided into an upper part and a lower part offset thereto and the two parts are connected to one another by an opening (69") formed at an intermediate floor (69"').

3. Water top-up plug in accordance with claim 1 or claim 2, **characterized in that** one or more water throughflow chambers (69) are provided outside of the receiving bore (43) for the float rod (20) and stand in flow communication at the top with the water chamber (13) and at the bottom with that region of the plug housing (11) which adjoins the inner space of the battery cell closed by the water top-up plug

4. Water top-up plug in accordance with any one of the preceding claims, **characterized in that** a valve chamber (24), which is bounded at one end, preferably at the top, by the valve seat (26) is formed in the plug housing (11), with the valve body (22) being arranged in the valve chamber (24) for movement towards the valve seat (26) and away from it and being preferably guidedly arranged.

5. Water top-up plug in accordance with any one of the preceding claims, **characterized in that** the discus-like valve body (22) is surrounded by axial ribs (62) extending in the direction of motion of the valve body (22), with axial grooves (63) located between the axial ribs, which preferably directly adjoin the plug housing (11) radially outwardly.

6. Water top-up plug in accordance with claim 5, **characterized in that** the water inlet (18) of the valve (14) is formed as a bore (18) arranged beneath the valve chamber (24) and optionally beneath the axial ribs (62), wherein the flow connection (17) opens into the bore (18), preferably at a clear spacing from the valve chamber (24) and in particular at the edge, arid wherein the bore is preferably sealed at the bottom by an abutment spigot (32) inserted from the bottom, having a smaller diameter than the bore (18).

7. Water top-up plug in accordance with any one of the preceding claims, **characterized in that** the valve chamber (24) is dimensioned so that the valve body (22) can be installed, optionally with an O-ring (23) prior to the introduction of the abutment pin (32).

8. Water top-up plug in accordance with claim 7, **characterized in that** the abutment pin (32) has, preferably at the top, a seat (35), in particular a funnel-like seat, for the valve body (22) which is located in the open position.

9. Water top-up plug in accordance with any one of the preceding claims, **characterized in that** the valve chamber (24) and the bore (18), which is preferably concentric to it, is eccentrically arranged in the circular plug housing (11) and has a diameter which is preferably smaller than the plug housing (11) by more than half.

10. Water top-up plug in accordance with any one of the preceding claims, **characterized in that** the receiving bore (43) for the float rod (20) is preferably arranged at least substantially centrally and coaxially in the plug housing (11).

11. Water top-up plug in accordance with claim 9 or claim 10, **characterized in that** an axial diagnostic opening (25) is provided passing from the outside to the inside and diametrically opposite to the valve chamber (24) is provided through which acid can be extracted to determine the state of charge.

12. Water top-up plug in accordance with claim 11, **characterized in that** the diagnosis opening (25) and the water chamber (13) are sealed off from the outside by a common, removable lid (53).

13. Water top-up plug in accordance with any one of the preceding claims, **characterized in that** the tube stub (16) or the tub stubs (16) is or are formed in one piece with the plug housing (11) and preferably extend perpendicular to the central axis (65) of the plug housing (11).

14. Water top-up plug in accordance with claim 13, **characterized in that** one and preferably two oppositely directed tube stubs (16) are radially provided between the valve chamber (24) and the receiving bore (43) for the float rod as well as axially above the valve chamber (24), preferably to the side of the valve stem (27).

15. Water top-up plug in accordance with claim 14, **characterized in that** the pipe stubs (16) merge into a throughflow passage (57) aligned with them and provided in the plug housing (11), from which a connection passage (17) branches off, preferably in the middle and in particular perpendicularly, the connection passage being provided in a lateral material projection (29') at the edge of the bore (18) and extending downwardly, preferably into the ring space between the outer walls of the bore (18) and the abutment pin (32) such that the water flows through the connection channel (17) into the relevant ring space and can pass from there upwardly into the valve chamber (24) and the axial grooves (63).

16. Water top-up plug in accordance with any one of the preceding claims, **characterized in that** the plug housing (11) has a cover plate (64) above the right cylindrical connection region (60), on which the housing parts of the valve chamber (24), the valve rod receiving bore (43) and the diagnosis opening (25) are provided in one piece and extend upwardly and downwardly.

17. Water top-up plug in accordance with any one of the preceding claims, **characterized in that** the side walls of the valve chamber (24) are formed by parts of the plug housing (11), i.e. form an integrating component of the plug housing (11), and **in that** the optionally provided axial ribs (62) likewise form an integrating component of the plug housing (11).

18. Water top-up plug in accordance with any one of the preceding claims, **characterized in that** the axial ribs (62) extend axially up to the level of the valve seat (26).

19. Water top-up plug in accordance with any one of the preceding claims, **characterized in that** an O-ring receiving recess (70) with a smaller diameter than the valve chamber (24) and a larger diameter than the valve stem bore (15') is provided axially between the valve chamber (24) and the valve stem bore (15').

20. Water top-up plug in accordance with claim 19, **characterized in that** the optionally present axial ribs (62) extend radially inwardly until shortly before or at most up to the radially outer edge of the O-ring receiving recess (70).

21. Water top-up plug in accordance with any one of the preceding claims, **characterized in that** one or more gas outlet openings (71) are provided in the region of the side wall of the plug housing (11) lying above the cover plate (64) and stand in communication with the lower hollow space of the plug housing (11) leading to the interior of the battery, wherein in particular the cover (53) has a downwardly directed cover rim (53'), which at least partly covers over the gas outlet opening(s) (71) with spacing.

22. Water top-up plug in accordance with claim 21, **characterized in that** the gas outlet opening (71) inwardly adjoins a preferably vertical gas conducting channel (72), which produces the connection to the lower hollow space, wherein a vertical channel wall (71') and/or a vertical channel wall piece (71") preferably narrow down the gas conducting channel (72) to at least substantially the size of the gas outlet opening(s) (71) and in particular extend it downwardly up to and into the hollow space, and indeed expediently up to the lower edge of the diagnosis opening (25).

23. Water top-up plug in accordance with any one of the preceding claims, **characterized in that** a guide cuff (15") for the valve rod (27) is provided above the bore (15') for the valve rod (27) at a vertical spacing thereto, through which the valve rod (27) enters into the water chamber (13).

24. Water top-up plug in accordance with claim 23, **characterized in that** the passage sections (55) start directly above the upper end of the bore (15') for the valve rod (27) and extend upwardly up to the upper end of the guide cuff (15"), where the water chamber (13) above it starts.

## Revendications

1. Bouchon de remplissage automatique pour batterie d'accumulateur contenant un électrolyte liquide, comprenant un boîtier de bouchon (11) réalisé dans la région inférieure de façon complémentaire à une ouverture supérieure d'un boîtier de batterie, ou à un adaptateur qui est lui-même conçu de son côté de façon complémentaire à une ouverture supérieure du boîtier de batterie, comprenant une chambre à eau (13) agencée en haut dans le boîtier de bouchon (11), refermée vers l'extérieur et de préférence sous forme cylindrique et/ou comprenant en haut un couvercle (53) en particulier amovible, ladite chambre étant raccordée à une ouverture d'amenée d'eau (15) susceptible d'être refermée par une vanne (14) constituée par un corps de vanne (22) et par un siège de vanne (26) et possédant une arrivée d'eau (18) de préférence réalisée sous forme de perçage, ladite chambre comprenant au moins une liaison d'écoulement (59, 69, 69') avec la région du boîtier de bouchon (11) qui communique avec le volume intérieur de la batterie après mise en place dans une ouverture du boîtier de batterie, comprenant au moins un manchon tubulaire (16), agencé sur le boîtier de bouchon (11), sur lequel on peut poser un tuyau d'amenée d'eau et en communication d'écoulement (17) avec l'arrivée d'eau (18), comprenant un flotteur (19) qui s'étend à travers un perçage de réception (43), de préférence central, du boîtier de bouchon (11) et qui dépasse vers le bas hors dudit boîtier de bouchon (11), ledit flotteur étant relié au corps de vanne (22) par l'intermédiaire d'une tige de flotteur (20), d'une pièce transversale (21) prévue à son extrémité supérieure, ainsi que d'une tige de vanne (27), et dans lequel le siège de vanne (26) et l'ouverture d'arrivée d'eau (15) sont réalisés sur ou dans une partie du boîtier de bouchon (11), c'est-à-dire qu'ils forment un composant intégré du boîtier de bouchon (11), et dans lequel la tige de vanne (27) s'étend depuis le corps de vanne (22) jusqu'à la pièce transversale (21) à travers un perçage (15'), dans le boîtier de bouchon (11), qui se raccorde de préférence en haut à la chambre de vanne (24), ce perçage ayant un diamètre supérieur à celui de la tige de vanne (27) de sorte qu'il existe autour de la tige de vanne (27) un espace annulaire qui forme un canal d'arrivée d'eau qui se raccorde à l'ouverture d'arrivée d'eau (15), **caractérisé en ce qu'**il est prévu un ou plusieurs tronçons de canaux (55), agencés autour du perçage (15') pour la tige de vanne (27) et/ou au-dessus de celui-ci, lesquels sont ouverts en haut en direction de la chambre à eau (13) et se transforment latéralement en une ou plusieurs chambres de traversée d'eau (69') dont l'extrémité inférieure communique avec la cellule de batterie associée.

2. Bouchon de remplissage automatique selon la revendication 1, **caractérisé en ce que** les chambres de traversée d'eau (69') sont subdivisées en une partie supérieure et une partie inférieure décalée vis-à-vis de celle-ci, et **en ce que** les deux parties sont reliées l'une à l'autre via une ouverture (69") formée dans un fond intermédiaire (69"').

3. Bouchon de remplissage automatique selon l'une ou l'autre des revendications 1 et 2, **caractérisé en ce qu'**il est prévu une ou plusieurs chambres de traversée d'eau (69) à l'extérieur du perçage de réception (43) pour la tige de flotteur (20), lesquelles sont en communication d'écoulement en haut avec la chambre à eau (13) et en bas avec la région du boîtier de bouchon (11) qui se raccorde à la chambre intérieure de la cellule de batterie qui est refermée par le bouchon de remplissage automatique.

4. Bouchon de remplissage automatique selon l'une des revendications précédentes, **caractérisé en ce qu'**une chambre de vanne (24) limitée d'un côté et de préférence en haut par le siège de vanne (26) est réalisée dans le boîtier de bouchon (11), dans laquelle est agencé le corps de vanne (22) avec faculté de déplacement vers le siège de vanne (26) ou en éloignement de celui-ci, et de préférence de façon guidée.

5. Bouchon de remplissage automatique selon l'une des revendications précédentes, **caractérisé en ce que** le corps de vanne (22) réalisé sous forme d'un disque est entouré sur tout le pourtour par des nervures axiales (62) qui s'étendent en direction de déplacement du corps de vanne (22) et par des rainures axiales (63) situées entre les nervures, ces rainures et ces nervures étant de préférence directement adjacentes radialement à l'extérieur au boîtier de bouchon (11).

6. Bouchon de remplissage automatique selon la revendication 5, **caractérisé en ce que** l'entrée d'eau (18) de la vanne (14) est réalisée sous la forme d'un perçage (18) agencé au-dessous de la chambre de vanne (24) et le cas échéant des nervures axiales (62), perçage dans lequel débouche la liaison d'écoulement (17) de préférence à une distance significative depuis la chambre de vanne (24) et en particulier à la bordure, et qui est de préférence refermé en bas de façon étanche par un tenon de butée (32) engagé depuis le bas et présentant un diamètre inférieur à celui du perçage (18).

7. Bouchon de remplissage automatique selon le l'une des revendications précédentes, **caractérisé en ce que** la chambre de vanne (24) présente des dimensions telles qu'avant l'introduction du tenon de butée (32) le corps de vanne (22) peut être monté, le cas échéant avec un joint torique (23).

8. Bouchon de remplissage automatique selon la revendication sept, **caractérisé en ce que** le tenon de butée (32) comporte de préférence en haut un siège (35) en particulier en forme d'entonnoir, pour le corps de vanne (22) qui se trouve dans la position ouverte.

9. Bouchon de remplissage automatique selon l'une des revendications précédentes, **caractérisé en ce que** la chambre de vanne (24), et le perçage (18) de préférence concentrique à celle-ci, est agencée de façon excentrique dont le boîtier de bouchon (11) de forme circulaire, et comporte un diamètre de préférence inférieur de plus de la moitié vis-à-vis du boîtier de bouchon (11).

10. Bouchon de remplissage automatique selon l'une des revendications précédentes, **caractérisé en ce que** le perçage de réception (43) pour la tige de flotteur (20) est agencé de préférence au moins sensiblement au centre et de façon coaxiale dans le boîtier de bouchon (11).

11. Bouchon de remplissage automatique selon l'une ou l'autre des revendications 9 et 10, **caractérisé en ce qu'**il est prévu, diamétralement à l'opposé de la chambre de vanne (24), une ouverture de diagnostic (25) axiale et traversant de l'extérieur vers l'intérieur, à travers laquelle on peut prélever des acides afin de déterminer l'état de charge.

12. Bouchon de remplissage automatique selon la revendication 11, **caractérisé en ce que** l'ouverture de diagnostic (25) et la chambre à eau (12) sont refermées de façon étanche depuis l'extérieur par un couvercle amovible commun (53).

13. Bouchon de remplissage automatique selon l'une quelconque des revendications précédentes, **caractérisé en ce que** le ou les manchon(s) tubulaire(s) (16) est(sont) réalisé(s) d'une seule pièce avec le boîtier de bouchon (11) et s'étend(ent) de préférence perpendiculairement à l'axe médian (65) du boîtier de bouchon (11).

14. Bouchon de remplissage automatique selon la revendication 13, **caractérisé en ce qu'**il est prévu de préférence deux manchons tubulaires (16) dirigés en sens opposé, radialement entre la chambre de vanne (24) et le perçage de réception (43) pour la tige de flotteur, ainsi qu'axialement au-dessus de la chambre de vanne (24) et de préférence latéralement par rapport à la tige de vanne (27).

15. Bouchon de remplissage automatique selon la revendication 14, **caractérisé en ce que** les manchons tubulaires (16) se transforment dans un canal de traversée (57) prévu dans leur alignement dans le boîtier de bouchon (11), depuis lequel est branché un canal de liaison (17), de préférence au milieu et en particulier perpendiculairement, ce canal de liaison étant prévu dans une saillie latérale du matériau (29') à la bordure du perçage (18) et s'étendant vers le bas de préférence jusque dans l'espace annulaire entre les parois extérieures du perçage (18) et du tenon de butée (32), de sorte que l'eau s'écoule à travers le canal de liaison (17) jusque dans l'espace annulaire concerné, et peut parvenir depuis celui-ci vers le haut jusque dans la chambre de vanne (24) et les rainures axiales (63).

16. Bouchon de remplissage automatique selon l'une des revendications précédentes, **caractérisé en ce que** le boîtier de bouchon (11) comporte une plaque de couverture (64) au-dessus de la zone de liaison cylindrique (60), sur laquelle sont prévus d'une seule pièce en s'étendant vers le haut et vers le bas les parties de boîtier de la chambre de vanne (24), du perçage de réception (43) pour la tige de vanne, et de l'ouverture de diagnostic (66).

17. Bouchon de remplissage automatique selon l'une des revendications précédentes, **caractérisé en ce que** les parois latérales de la chambre de vanne (24) sont formées par des parties du boîtier de bouchon (11), c'est-à-dire qu'elles forment un composant intégré du boîtier de bouchon (11), et **en ce que** les nervures axiales (62) prévues en option forment également un composant intégré du boîtier de bouchon (11).

18. Bouchon de remplissage automatique selon l'une des revendications précédentes, **caractérisé en ce que** les nervures axiales (62) s'étendent axialement jusqu'à la hauteur du siège de vanne (26).

19. Bouchon de remplissage automatique selon l'une des revendications précédentes, **caractérisé en ce qu'**il est prévu, axialement entre la chambre de vanne (24) et le perçage (15') pour la tige de vanne, un renfoncement de réception (70) pour joint torique, avec un diamètre plus petit que la chambre de vanne (24) et un diamètre plus grand que le perçage (15').

20. Bouchon de remplissage automatique selon la revendication 19, **caractérisé en ce que** les nervures axiales (62) prévues en option s'étendent radialement vers l'intérieur jusqu'à une brève distance avant le renfoncement de réception (70), ou tout au plus jusqu'à la bordure extérieure radiale de ce renfoncement de réception (70).

21. Bouchon de remplissage automatique selon l'une des revendications précédentes, **caractérisé en ce que** dans la région de la paroi latérale du boîtier de bouchon (11) située au-dessus de la plaque de couverture (64) sont prévues une ou plusieurs ouvertures de sortie de gaz (71), en communication avec la cavité inférieure du boîtier de bouchon (11) qui mène à l'intérieur de la batterie, et **en ce que** le couvercle (53) comporte en particulier un rebord de couvercle (53') dirigé vers le bas, qui couvre au moins partiellement à distance la ou les ouverture(s) de sortie de gaz (71).

22. Bouchon de remplissage automatique selon la revendication 21, **caractérisé en ce que** l'ouverture de sortie de gaz (71) est adjacente à l'intérieur à un canal de gaz (72) de préférence vertical, qui établit la liaison vers la cavité inférieure, et une paroi de canal verticale (71') et/ou un morceau de paroi de canal verticale (71") rétrécit de préférence le canal à gaz (72) au moins sensiblement jusqu'à la taille de la ou des ouverture(s) de sortie de gaz (719), et le prolonge vers le bas jusque dans la cavité, et cela judicieusement jusqu'à la bordure inférieure de l'ouverture de diagnostic (25).

23. Bouchon de remplissage automatique selon l'une des revendications précédentes, **caractérisé en ce qu'**il est prévu au-dessus du perçage (15') pour la tige de vanne (27) et à distance verticale de celui-ci, une manchette de guidage (15") pour la tige de vanne (27), à travers laquelle la tige de vanne (27) parvient jusque dans la chambre à eau (13).

24. Bouchon de remplissage automatique selon la revendication 23, **caractérisé en ce que** les tronçons de canaux (55) commencent immédiatement au-dessus de l'extrémité supérieure du perçage (15') pour la tige de vanne (27) et s'étendent vers le haut jusqu'à l'extrémité supérieure de la manchette de guidage (15"), où commence la chambre à eau (13) située au-dessus.
